# EUROPEAN PATENT APPLICATION

(11) **EP 4 671 811 A1**
(43) Date of publication of application: **31.12.2025**
(21) Application number: 24184993.4
(22) Date of filing: 27.06.2024
(51) Int. Cl.: G01S 7/40, G01S 13/931, H01Q 1/24, H01Q 23/00

(54) **RADAR ANTENNA UNIT, RADAR TARGET SIMULATOR ELEMENT AND RADAR TARGET SIMULATOR**

(71) Applicant: Robert Bosch GmbH, 70442 Stuttgart (DE)
(72) Inventor: Ther, Istvan, 1103 Budapest (HU); Gonzalez Rodriguez, Erick, 71282 Hemmingen (DE); Erdei, Bence, 2220 Vecses (HU)

(57) **Abstract**

The invention relates to a radar antenna unit (26) for a radar target simulator (12) for emulating a radar target echo signal (14) for a radar sensor (16) under test, comprising an antenna (28) configured to receive a free space propagated radar signal (21) transmitted by the radar sensor (16) under test and to transmit the emulated radar target echo signal (14) to the free space, a first port (30) configured to be connected to a transmitter (22) to generate the emulated radar target echo signal (14) to be transmitted, a second port (32) configured to be connected to a receiver (24) to receive the free space propagated radar signal (21), a waveguide element (34) including waveguide channels (36) to transfer the radar signals (14, 21) between the first port (30), the second port (32) and the antenna (28), including a shared first waveguide channel (38) for receiving and transmitting the radar signals (14, 21) which is connected to the antenna (28) and further including a circulator (40) configured to circulate the radar signal (21) receivable from the antenna (28) through the first waveguide channel (38) to the second port (32) and the radar signal (14) from the first port (30) to the antenna (28) through the first waveguide channel (38). The invention further regards a radar target simulator element (18) und a radar target simulator (12).

## Description

The invention relates to a radar antenna unit according to claim 1. The invention further regards a radar target simulator element and a radar target simulator.

### Prior Art

Radar target simulators are designed to create emulated radar targets for radar sensor under test while minimizing unwanted signals, so called "ghost" signals, from false targets and ambient electromagnetic interference. These ghost targets often arise from additional radio frequency signals originating from various sources, such as leakage currents between transmit and receive antennas and reflections off the hardware within the radar target simulator. Consequently, multiple paths exist within the radar target simulator where the incoming signal might "leak" from the input to the output. This leakage occurs because each component has some degree of coupling to other parts of the system, whether through the air, substrate, or the electronic devices themselves. Reducing crosstalk beneficially decreases the occurrence of erroneous simulations, that means fewer "ghost" targets, thereby enhancing the accuracy of system testing for the radar sensor under test.

### Summary of the Invention

According to the present invention it is suggested a radar antenna unit for a radar target simulator element including all features from claim 1. The radar target simulator can be built much cheaper and can provide a higher density of the radar target simulator elements. The radar target emulation can be improved, especially in terms of numbers of targets and angular resolution. Further, unwanted radar reflections can be minimized.

The radar sensor under test can be an automotive radar sensor, especially for advanced driver assistance systems (ADAS) and/or autonomous driving of a vehicle. The radar sensor under test can be a Frequency Modulated Continuous Wave (FMCW) and/or Multiple Input Multiple Output (MIMO) radar sensor.

The frequency of the received and transmitted radar signal can be within the range 30 GHz to 300 GHz.

Free space signal propagation includes over the air propagation between the radar sensor under test and the radar antenna unit.

The radar target simulator together with the radar sensor under test can provide a hardware-in-the-loop setup and/or vehicle-in-the-loop setup. The radar target simulator allows testing and calibration of the radar sensor under test. The radar target simulator generates at least one, preferably several, radar target echo signal(s) that mimic the characteristics of actual targets, including range, speed, size, angle of attack and/or radar cross-section. It can simulate multiple targets including moving and/or stationary targets simultaneously, each with distinct parameters, to test the ability of the radar sensor under test to track multiple targets.

The radar target simulator can cover multiple radar bands aligning with the operational frequencies of the radar sensor under test. The radar target simulator can produce various radar waveforms, including Continuous Wave (CW), Frequency Modulated Continuous Wave (FMCW), pulsed signals and/or doppler shifts. The radar target simulator can allow control over the amplitude and phase of the emulated radar target echo signals to replicate different target scenarios and signal conditions.

The radar target simulator can include features that minimize unwanted signals, such as "ghost" targets and ambient electromagnetic interference. These "ghost" targets often result from additional signals from sources like leakage currents between transmit and receive antennas and reflections off the hardware. The radar target simulator can reduce crosstalk and leakage between transmit and receive antennas, thereby minimizing erroneous simulations and improving the accuracy of testing conditions. The radar target simulator can include environmental simulation capabilities, emulating various traffic and environmental conditions that affect radar signal propagation. This can include simulating rain, fog and/or other weather conditions. The radar target simulator may comprise real-time processing capabilities, such that the emulated radar target signals are generated and modified dynamically based on the radar sensor responses.

Key performance parameters for circulators can include Insertion Loss, Voltage Standing Wave Ratio (VSWR) and/or Isolation. These parameters are directly affected by the operating bandwidth. As the bandwidth increases, the performance of these parameters tends to degrade. Insertion Loss refers to the total energy lost during the transmission of the radar signal from one port to another within the circulator. Isolation measures the separation of radar signal levels between adjacent ports and is preferably expressed in decibels. Higher isolation values indicate less interference from radar signals on one port relative to an adjacent port, which is crucial for reducing cross-talk and maintaining signal integrity. VSWR is the ratio of reflected power to incident power caused by impedance mismatches between the signal source and load resulting in unwanted standing waves when transmitted energy is reflected back to the source.

The waveguide element can comprise a second waveguide channel connected to the circulator and the first port. The waveguide element can comprise a third waveguide channel connected to the circulator and the second port. The second and third waveguide channel can be arranged in parallel.

According to a specific embodiment of the invention, the waveguide element is made of plastic material. The waveguide element can be fabricated by a plastic molding process. The waveguide element can be a single part or can comprise multiple parts attached to each other. All parts can be made of plastic or at least some of the parts can be made of composite material.

According to a further specific embodiment of the invention, the circulator comprises a ferrite junction made of Yttrium Iron Garnet material. The ferrite junction material can be a ceramic compound consisting of iron oxide (Fe₂O₃) combined chemically with one or more additional metallic elements. The ferrite junction material has non-reciprocal behavior when subjected to a magnetic field. The radar signal can be directed from port to port in a specific direction without reciprocal behavior.

Yttrium Iron Garnet (YIG) provides good thermal stability. Alternatively, Nickel-Zinc Ferrite (NiZn) or Magnesium Zinc Ferrite (MgZn) can be used as ferrite junction material for the circulator.

The ferrite junction can be magnetized, especially transversally magnetized, to direct incoming radar signal energy sequentially through its ports. A radar signal will experience low loss in the direction given by the circulator and high loss in the reverse direction. The magnetic field is preferably applied along the vertical axis of the circulator, causing the radar signal energy to circulate from one port to the adjacent port depending on the origin of the radar signal.

At least one permanent magnet can be attached to the circulator. The permanent magnet can be arranged inside or outside of the waveguide element. The permanent magnet material can be Samarium-Cobalt (SmCo) or Neodymium-lron-Boron (NdFeB) or ferrite. Such permanent magnet can be arranged on both ends of the junction.

According to a specific embodiment of the invention, the radar antenna unit further comprises a printed circuit board to which the waveguide element is attached. The antenna and the printed circuit board can be glued and/or screwed to each other.

According to a preferred embodiment of the invention, the printed circuit board is based on a FR-4 substrate. This allows to produce the radar antenna unit cheaper. The FR-4 substrate includes a woven fiberglass cloth with an epoxy resin binder. The printed circuit board can be based on FR-4 substrate as the only substrate material.

According to the present invention it is further suggested a radar target simulator element including all features from claim 6. The radar target simulator element can comprise at least one amplifier for amplifying the radar signals. The radar target simulator element can be a monostatic radar element where transmitter and receiver are co-located. An important advantage of the monostatic antenna is that it is detected as a single point by a MIMO radar sensor under test. This allows to improve the angle estimation of the MIMO radar sensor under test and a very compact solution, allowing for an arrangement of high-resolution grid of antennas with optimal angle-of-arrival simulation. This compact monostatic arrangement can ensure that the angle estimation of the MIMO radar sensor under test remains accurate and reliable, enhancing the overall performance and resolution of the radar target simulator.

According to a preferred embodiment of the invention, the radar target simulator element includes a radar sensor chip. The radar sensor chip or a circuit element which includes the radar sensor chip can be connected to the radar antenna unit with a ball grid array.

According to a specific embodiment of the invention, the radar sensor chip is connected to a launcher in package structure. The radar sensor chip and the launcher in package (LiP) structure can be part of a monolithic microwave integrated circuit (MMIC). The launcher in package sructure can comprise the transmitter and receiver. The launcher in package structure, preferably the MMIC, can be connected to the radar antenna unit with a ball grid array. The LiP provides efficient transition of the radar signals from the radar sensor chip to the waveguide element. The LiP acts as an interface, ensuring that signals generated by the radar sensor chip are effectively launched into the waveguide element. The LiP can be designed to match the impedance between the radar sensor chip and the waveguide element to reduce insertion and reflection losses.

According to a further specific embodiment of the invention, the radar sensor chip and the radar antenna unit are arranged on opposite sides of the printed circuit board. Some balls of the ball grid array may serve as a waveguide boundary. The printed circuit board can comprise via holes for transmission of the radar signals between the sensor chip or launcher and the radar antenna.

According to the present invention it is further suggested a radar target simulator including all features from claim 10. The radar target simulator can comprise at least 512 radar target simulator elements as describes above. The radar target simulator can be stationary. During testing of the radar sensor under test, the radar target simulator can stay spatially fixed.

Further advantages and advantageous embodiments of the invention emerge from the description of the figures and the figures.

### Figure Description

The invention is described in detail below with reference to the following figures which show:
- Figure 1:: A schematic layout of a radar target simulator setup in a specific embodiment of the invention.
- Figure 2:: A cross sectional view of a radar target simulator element with a radar antenna unit in a specific embodiment of the invention.
- Figure 3:: An exploded view of a radar antenna unit in a further specific embodiment of the invention.

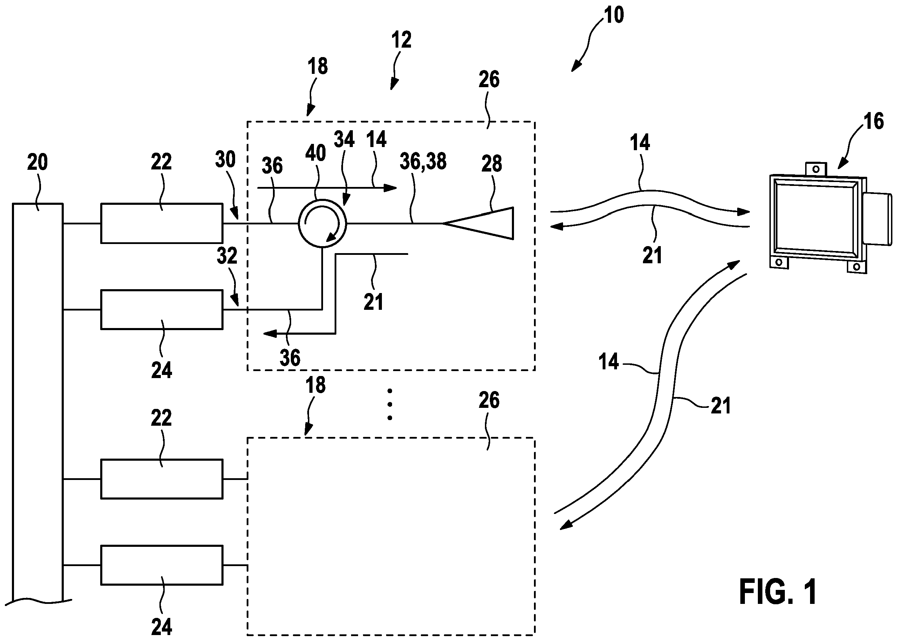

Figure 1 shows a schematic layout of a radar target simulator setup in a specific embodiment of the invention. The radar target simulator setup 10 includes a radar target simulator 12 for emulating a radar target echo signal 14 for a radar sensor 16 under test and the radar sensor 16 under test located with a distance to the radar target simulator 12.

The radar target simulator 12 comprises several radar target simulator elements 18, which are connected to a target simulation processing unit 20, which is configured to process the received free space propagated radar signal 21 transmitted by the radar sensor 16 under test and to generate the emulated radar target echo signal 14 to be transmitted from the radar target simulator elements 18.

Each radar target simulator element 18 includes a transmitter 22 configured to transmit the emulated radar target echo signal 14 and a receiver 24 configured to receive the free space propagated radar signal 21 transmitted by the radar sensor 16 under test and a radar antenna unit 26. The transmitter 22 and receiver 24 with the common antenna unit 26 are arranged in a monostatic setup.

The radar antenna unit 26 comprises an antenna 28 configured to receive the free space propagated radar signal 21 transmitted by the radar sensor 16 under test and to transmit the emulated radar target echo signal 14 to the free space. Further arranged is a first port 30 connected to the transmitter 22 to generate the emulated radar target echo signal 14 to be transmitted and a second port 32 connected to the receiver 24 to receive the free space propagated radar signal 21. The radar antenna unit 26 further comprises a waveguide element 34 including waveguide channels 36 to transfer the radar signals between the first port 30, the second port 32 and the antenna 28, including a shared first waveguide channel 38 for receiving and transmitting the radar signals 14, 21. The first waveguide channel 38 is connected to the antenna 28 and further to a circulator 40 configured to circulate the radar signal as the transmitted free space propagated radar signal 21 received from the antenna 28 through the first waveguide channel 38 to the second port 32 and the radar signal as the emulated radar target echo signal 14 transmitted from the antenna 28 from the first port 30 to the antenna 28 through the first waveguide channel 38.

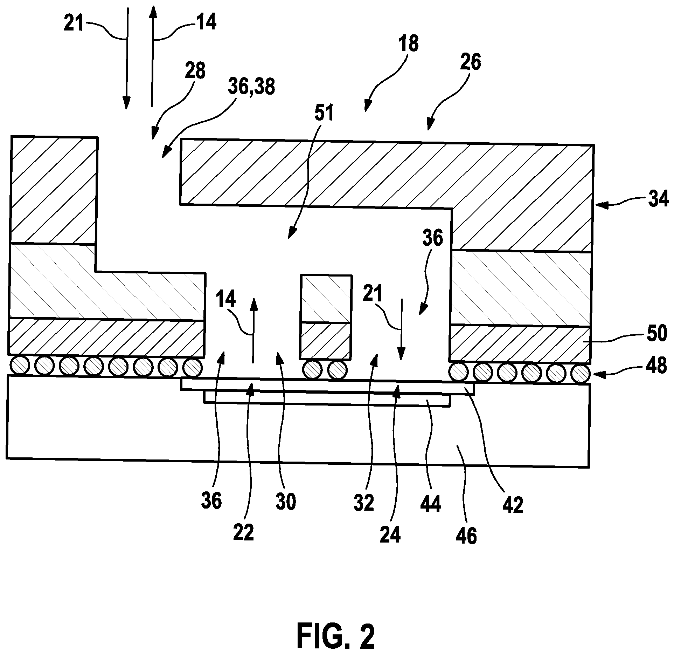

Figure 2 shows a cross sectional view of a radar target simulator element with a radar antenna unit in a specific embodiment of the invention. The radar target simulator element 18 includes the transmitter 22 configured to transmit the emulated radar target echo signal 14 and the receiver 24 configured to receive the free space propagated radar signal 21 transmitted by the radar sensor under test. The radar antenna unit 26 comprises the antenna 28 configured to receive the free space propagated radar signal 21 transmitted by the radar sensor under test and to transmit the emulated radar target echo signal 14 to the free space, a first port 30 connected to the transmitter 22 to generate the emulated radar target echo signal 14 to be transmitted and a second port 32 connected to the receiver 24 to receive the free space propagated radar signal 21.

The transmitter 22 and receiver 24 are included in a launcher in package structure 42. A radar sensor chip 44 is connected to the launcher in package structure 42. The radar sensor chip 44 generates the radar signal to be transmitted and processes the received radar signal. The launcher in package structure 42 as well as the radar sensor chip 44 are included in a monolithic microwave integrated circuit element 46.

A ball grid array 48 connects the monolithic microwave integrated circuit element 46 with a printed circuit board 50. The printed circuit board 50 is preferably based on a FR-4 substrate. The radar antenna unit 26 is especially glued and/or screwed to the printed circuit board 50. The radar sensor chip 44 and the radar antenna unit 26 are arranged on opposite sides of the printed circuit board 50.

The radar antenna unit 26 further comprises the waveguide element 34 made of plastic material including waveguide channels 36 to transfer the radar signals 14,21 between the first port 30, the second port 32 and the antenna 28, including the shared first waveguide channel 38 for receiving and transmitting the radar signals 14, 21 which is connected to the antenna 28 and further including the circulator, which is not shown in this view but which is arranged in the circulator area 51 and which is configured to circulate the radar signal 21 receivable from the antenna 28 through the first waveguide channel 38 to the second port 32 and the radar signal 14 from the first port 30 to the antenna 28 through the first waveguide channel 38.

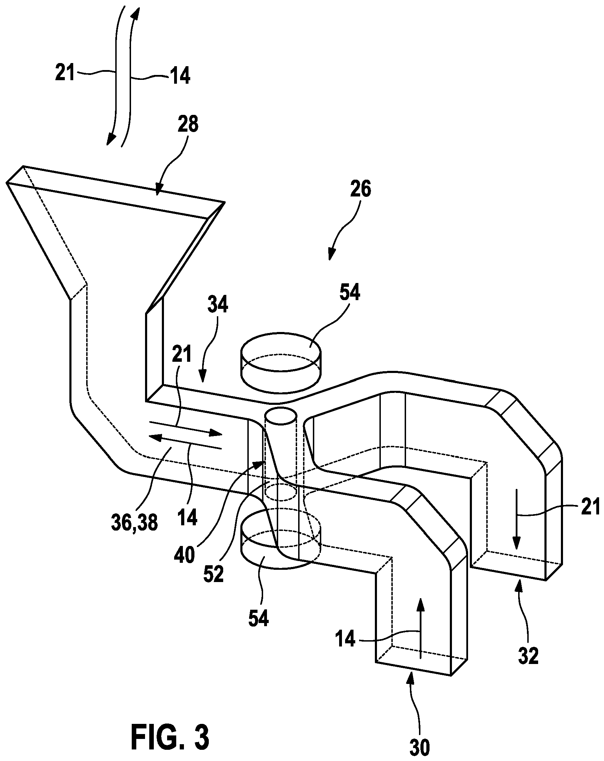

Figure 3 shows an exploded view of a radar antenna unit in a further specific embodiment of the invention. The radar antenna unit 26 comprises the antenna 28 configured to receive the free space propagated radar signal 21 transmitted by the radar sensor under test and to transmit the emulated radar target echo signal 14 to the free space, the first port 30 configured to be connected to a transmitter to generate the emulated radar target echo signal 14 to be transmitted and the second port 32 configured to be connected to a receiver to receive the free space propagated radar signal 21. The radar antenna unit 26 further comprises the waveguide element 34 made of plastic material including waveguide channels 36 to transfer the radar signals 14, 21 between the first port 30, the second port 32 and the antenna 28, including the shared first waveguide channel 38 for receiving and transmitting the radar signals 14, 21 which is connected to the antenna 28 and further including the circulator 40 configured to circulate the radar signal 21 receivable from the antenna 28 through the first waveguide channel 38 to the second port 32 and the radar signal 14 from the first port 30 to the antenna 28 through the first waveguide channel 38.

The circulator 40 comprises a ferrite junction 52 made of Yttrium Iron Garnet material. Two permanent magnet 54 are attached on opposite sides to the ferrite junction 52 of the circulator 40. The permanent magnets 54 are arranged outside of the waveguide element 34 on both ends of the circulator 40 to generate the magnetic field for circulating the radar signals 14, 21 through the circulator 40.

## Claims

1. Radar antenna unit (26) for a radar target simulator (12) for emulating a radar target echo signal (14) for a radar sensor (16) under test, comprising an antenna (28) configured to receive a free space propagated radar signal (21) transmitted by the radar sensor (16) under test and to transmit the emulated radar target echo signal (14) to the free space,
a first port (30) configured to be connected to a transmitter (22) to generate the emulated radar target echo signal (14) to be transmitted,
a second port (32) configured to be connected to a receiver (24) to receive the free space propagated radar signal (21),
a waveguide element (34) including waveguide channels (36) to transfer the radar signals (14, 21) between the first port (30), the second port (32) and the antenna (28), including a shared first waveguide channel (38) for receiving and transmitting the radar signals (14, 21) which is connected to the antenna (28) and further including a circulator (40) configured to circulate the radar signal (21) receivable from the antenna (28) through the first waveguide channel (38) to the second port (32) and the radar signal (14) from the first port (30) to the antenna (28) through the first waveguide channel (38).

2. Radar antenna unit (26) according to claim 1, **characterized in that** the waveguide element (34) is made of plastic material.

3. Radar antenna unit (26) according to claim 1 or 2, **characterized in that** the circulator (40) comprises a ferrite junction (52) made of Yttrium Iron Garnet material.

4. Radar antenna unit (26) according to any of the preceding claims, **characterized in that** the radar antenna unit (26) further comprises a printed circuit board (50) to which the waveguide element (34) is attached.

5. Radar antenna unit (26) according to claim 4, **characterized in that** the printed circuit board (50) is based on a FR-4 substrate.

6. Radar target simulator element (18) for a radar target simulator (12) for emulating a radar target echo signal (14) for a radar sensor (16) under test, comprising a transmitter (22) configured to transmit the emulated radar target echo signal (14),
a receiver (24) configured to receive a free space propagated radar signal (21) transmitted by the radar sensor (16) under test,
a radar antenna unit (26) according to any of the preceding claims configured to transfer the radar signals (14, 21) between the radar sensor (16) under test, the transmitter (22) and the receiver (24).

7. Radar target simulator element (18) according to claim 6, **characterized in that** radar target simulator element (18) includes a radar sensor chip (44).

8. Radar target simulator element (18) according to claim 7, **characterized in that** the radar sensor chip (44) is connected to a launcher in package structure (42).

9. Radar target simulator element (18) according to claim 4 or 5 and claim 7 or 8, **characterized in that** the radar sensor chip (44) and the radar antenna unit (26) are arranged on opposite sides of the printed circuit board (50).

10. Radar target simulator (12) for emulating a radar target echo signal (14) for a radar sensor (16) under test, comprising
a target simulation processing unit (20) configured to process a received free space propagated radar signal (21) transmitted by the radar sensor (16) under test and to generate the emulated radar target echo signal (14) to be transmitted and
several radar target simulator elements (18) each according to any of claims 6 to 9, wherein the radar target simulator elements (18) are connected to the target simulation processing unit (20) for data transfer.
